# EUROPÄISCHE PATENTSCHRIFT

(11) **EP 1 264 490 B1**
(45) Veröffentlichungstag und Bekanntmachung des Hinweises auf die Patenterteilung: **11.07.2007**
(21) Anmeldenummer: 01925328.5
(22) Anmeldetag: 10.02.2001
(51) Int. Cl.: H04Q 7/00

(54) **VERFAHREN ZUM FESTELLEN DER AUTHENTIZITÄT DER IDENTITÄT EINES DIENSTE-NUTZERS UND VORRICHTUNG ZUM DURCHFÜHREN DES VERFAHRENS**
METHOD FOR ESTABLISHING THE AUTHENTICITY OF THE IDENTITY OF A SERVICE USER AND DEVICE FOR CARRYING OUT THE METHOD
PROCEDE PERMETTANT DE VERIFIER L'AUTHENTICITE DE L'IDENTITE D'UN UTILISATEUR DE SERVICES ET DISPOSITIF PERMETTANT DE METTRE EN OEUVRE CE PROCEDE

(30) Priorität: 21.02.2000 DE 10007807
(43) Veröffentlichungstag der Anmeldung: 11.12.2002
(73) Patentinhaber: E-Plus Mobilfunk GmbH & Co. KG, 40468 Düsseldorf (DE)
(72) Erfinder: MÜLLER, Christian, 40477 Düsseldorf (DE); TROLIN, Alexis, 10719 Berlin (DE); ERGEZINGER, Siegfried, 40822 Mettmann (DE); DÖHLER, Anita, D-40822 Mettmann (DE)
(74) Vertreter: Beyer, Rudi
(86) Internationale Anmeldenummer: PCT/EP2001/001469
(87) Internationale Veröffentlichungsnummer: WO 2001/062016

(56) Entgegenhaltungen:
- DE-C- 19 722 424
- US-A- 5 875 394

## Beschreibung

### Gattung

Die Erfindung betrifft ein Verfahren zum Feststellen der Authentizität der Identität eines Dienste-Nutzers gegenüber einem Dienste-Anbieter zur Freigabe einer Zugangskennung für einen Dienst.

Des weiteren betrifft die Erfindung eine Vorrichtung zum Durchführen aller Verfahrensschritte des vorerwähnten Verfahrens.

### Stand der Technik

Durch die DE 197 18 103 A1 sind ein Verfahren und eine Vorrichtung zur Autorisierung in Datenübertragungssystemen unter Verwendung einer Transaktionsnummer (TAN) oder eines vergleichbaren Passwortes vorbekannt. Die vorbekannte Verfahrensweise schlägt vor, dass
- der Benutzer in einem ersten Schritt über ein Dateneingabegerät seine Identifizierung und/oder eine Identifizierungs-Kennung des Dateneingabegerätes zusammen mit der Aufforderung zur Generierung oder zur Auswahl einer TAN oder eines vergleichbaren Passworts aus einer Datei an einen Autorisierungsrechner sendet;
- in einem zweiten Schritt der Autorisierungsrechner die TAN oder das vergleichbare Passwort generiert oder aus einer Datei auswählt;
- in einem dritten Schritt der Autorisierungsrechner die TAN oder das vergleichbare Passwort über einen anderen Übertragungsweg als in Schritt 1 an einen Empfänger sendet;
- in einem vierten Schritt der Benutzer diese TAN oder das vergleichbare Passwort von dem Empfänger übernimmt und in das Dateneingabegerät eingibt;
- in einem fünften Schritt diese TAN oder das vergleichbare Passwort wieder an den Autorisierungsrechner übermittelt wird;
- in einem sechsten Schritt der Autorisierungsrechner die Gültigkeit der TAN oder des vergleichbaren Passworts prüft, um dann
- in einem siebten Schritt einen Verbindungsaufbau zwischen dem Dateneingabegerät und einer Empfangseinheit herzustellen oder freizuschalten.

Des weiteren wird in der Vorveröffentlichung vorgeschlagen, dass es sich um eine nur einmal verwendete TAN oder ein vergleichbares Passwort handelt. Die Gültigkeit der TAN oder des vergleichbaren Passwortes kann eine vordefinierte Benutzerzeit sein. Des weiteren kann die Gültigkeit der TAN oder des vergleichbaren Passwortes von einer vordefinierten Anzahl der übertragenen Dateien abhängig sein. Die Gültigkeit der TAN oder des vergleichbaren Passwortes ist von einer vordefinierten Größe der übertragenen Daten abhängig. Der Zugriff auf das Dateneingabegerät und/oder der Empfänger und/oder die Empfangseinheit sind durch das Passwort geschützt. Die von dem Dateneingabegerät an die Empfangseinheit oder umgekehrt übermittelten Dateien sind verschlüsselt. Die von dem Dateneingabegerät an den Autorisierungsrechner oder umgekehrt übertragenen Daten sind ebenfalls verschlüsselt. Der Empfänger kann ein Pager sein. Es ist aber auch möglich, dass der Empfänger ein Mobilfunkgerät ist. Des weiteren wird vorgeschlagen, den Empfänger als Telefax auszubilden. Der Empfänger kann aber auch eine E-mail- oder Netzwerkaddresse sein. Des weiteren ist es möglich, dass der Empfänger ein Datenausgabegerät ist. Schließlich wird vorgeschlagen, das Sprachausgabegerät als Lautsprecher oder als Sprachausgabegerät ein Telefon zu verwenden. Beschrieben wird auch, dass der Empfänger ein im Dateneingabegerät eingebauter Funkempfänger ist, welcher die TAN oder das vergleichbare Passwort auf dem Display oder Monitor des Dateneingabegeräts ausgibt. Das Funkgerät kann ein Benutzer-Identifizierungselement besitzen, wie es auch möglich ist, dass das Benutzer-Identifizierungselement eine Magnet- oder Chipkarte ist. Schließlich ist es denkbar, das Benutzer-Identifizierungselement mit grafischen Einrichtungen zur Überprüfung des Fingerabdruckes oder zu einer Bildidentifizierung des Benutzers auszubilden. Im Autorisierungsrechner und im Empfänger sind übereinstimmende Verschlüsselungs-Module vorhanden. Die Empfängereinheit kann aber auch ein Türschließmechanismus sein.

Außerdem wird vorgeschlagen, dass der Autorisierungsrechner und die Empfangseinheit in einem Gerät integriert sind. Das Dateneingabegerät, der Autorisierungsrechner und die Empfangseinheit können in einem Gerät integriert ausgebildet sein.

Durch die beschriebene Verfahrensweise sollen die in der DE 197 18 103 A1 beschriebenen weiteren vorbekannten Verfahrensweisen wie "Telebanking" und das sogenannte "Call-back-System" funktionssicherer gemacht werden.

Da der Benutzer beim ersten Schritt über ein Dateneingabegerät seine Identifizierung und/oder eine Identifizierungs-Kennung des Dateneingabegerätes zusammen mit der Aufforderung zur Generierung und zur Auswahl einer TAN oder eines vergleichbaren Passworts aus einer Datei an einen Autorisierungsrechner sendet, erfolgt der dritte Schritt, der nämlich darin besteht, dass der Autorisierungsrechner die TAN oder das vergleichbare Passwort an den Empfänger sendet über einen anderen Übertragungsweg, wobei in einem vierten Schritt der Benutzer diese TAN oder das vergleichbare Passwort von diesem Empfänger übernimmt und in sein Dateneingabegerät wieder eingibt. Somit werden zwei verschiedene Übertragungswege in Anspruch genommen. Die Authentizität des Benutzers, die für den Dienste-Anbieter von hoher Bedeutung ist, wird in dem in der DE 197 18 103 A1 beschriebenen Verfahren nicht überprüft.

Das in der DE 197 18 103 A1 beschriebene Verfahren lässt die Möglichkeit offen, dass ein Benutzer eine falsche Identität vorgibt, mit dem Ziel Missbrauch zu betreiben. Folgende Missbrauchmöglichkeiten bestehen hier:
1. Ein Benutzer meldet sich unter falscher Identität an und lässt sich das Passwort auf den Empfänger schicken.
2. Ein Benutzer meldet sich ordnungsgemäß an. Aufgrund von technischen Problemen verzögert sich die Zustellung des Passwortes an den Empfänger. Der Empfänger gerät inzwischen in unbefugte Hände.

Da das Verfahren darauf beruht, dass ein gültiges Passwort an den Empfänger geschickt wird, ist eine unbefugte Dienstenutzung zum Schaden des Dienste-Anbieters oder Dritter sofort möglich.

Durch die DE 197 22 424 C1 ist ein Verfahren zum gesicherten Zugreifen durch einen Benutzer auf ein getrenntes System mit in einer Speichervorrichtung gespeicherten Daten vorbekannt, mit den folgenden Schritten:
Aufbauen einer ersten Verbindung zwischen einer ersten Kommunikationseinrichtung und einer Zugriffsvorrichtung und Übertragung eines ersten Kennwortes von der ersten Kommunikationseinrichtung zur Zugriffsvorrichtung;
Vergleichen des ersten Kennwortes mit in der Zugriffsvorrichtung gespeicherten ersten Authentisierungsdaten;
Aufbauen einer zweiten Verbindung zwischen einer zweiten Kommunikationseinrichtung und der Zugriffsvorrichtung und Übertragung eines zweiten Kennwortes von der zweiten Kommunikationseinrichtung zur Zugriffsvorrichtung;
Vergleichen des zweiten Kennwortes mit in der Zugriffsvorrichtung gespeicherten zweiten Authentisierungsdaten; und
Freigabe eines Zugriffs auf das System mit einer oder beiden Kommunikationseinrichtungen bei Vorhandensein einer vorgegebenen Beziehung zwischen dem ersten und dem zweiten Kennwort mit den in der Zugriffsvorrichtung gespeicherten zweiten Authentisierungsdaten.

Vorgeschlagen werden in diesem Zusammenhang auch folgende Schritte:
Übertragen des zweiten oder eines dritten Kennwortes von der Zugriffsvorrichtung zu der ersten Kommunikationseinrichtung;
Übertragen des zweiten oder dritten Kennwortes von der ersten Kommunikationseinrichtung zur zweiten Kommunikationseinrichtung; und
Übertragen des zweiten oder dritten Kennwortes von der zweiten Kommunikationseinrichtung zur Zugriffsvorrichtung, die eine entsprechende Überprüfung des Kennwortes durchführt, bevor der Zugriff auf die Daten freigegeben wird.

Des weiteren wird der Aufbau einer Verbindung zwischen einer ersten Kommunikationseinrichtung und einer Zugriffsvorrichtung und Übertragung eines ersten Kennwortes von der ersten Kommunikationseinrichtung zur Zugriffsvorrichtung vorgeschlagen, wobei ein Vergleichen des ersten Kennwortes mit in der Zugriffsvorrichtung gespeicherten ersten Authentisierungsdaten erfolgt;
Bei Vorhandensein einer vorgegebenen Beziehung zwischen dem ersten Kennwort mit den in der Zugriffsvorrichtung gespeicherten Authentisierungsdaten, Aufbau einer zweiten Verbindung zwischen der Zugriffsvorrichtung und einer zweiten Kommunikationseinrichtung und Übertragung eines zweiten Kennwortes von der Zugriffsvorrichtung zur zweiten Kommunikationseinrichtung;
Übertragen des zweiten Kennwortes von der zweiten Kommunikationseinrichtung zur ersten Kommunikationseinrichtung;
Übertragen des zweiten Kennwortes von der ersten Kommunikationseinrichtung zur Zugriffsvorrichtung;
Vergleichen des zweiten Kennwortes mit in der Zugriffsvorrichtung gespeicherten zweiten Authentisierungsdaten; und
Freigabe eines Zugriffs auf das System mit einer oder beiden Kommunikationseinrichtungen, bei Vorhandensein einer vorgegebenen Beziehung zwischen dem zweiten Kennwort mit den in der Zugriffsvorrichtung gespeicherten zweiten Authentisierungsdaten.

Vorgeschlagen wird außerdem ein Verfahren, das gekennzeichnet ist durch Aufbauen der ersten und zweiten Verbindung über voneinander unabhängige Kommunikationswege, wobei als erste oder zweite Kommunikationseinrichtung eine Datenverarbeitungsvorrichtung verwendet wird, und die Verbindung zwischen der Datenverarbeitungsvorrichtung und der Zugriffsvorrichtung über ein Datenverarbeitungsvorrichtungsnetzwerk aufgebaut wird. Für die Verbindung zwischen der Zugriffsvorrichtung und der Datenverarbeitungsvorrichtung kann ein Internet verwendet werden. Als erste oder zweite Kommunikationseinrichtung kann ein Telefon verwendet werden, wobei die Verbindung zwischen Telefon und Zugriffsvorrichtung über ein Fernsprechnetz aufgebaut wird. Als Kommunikationsvorrichtung kann ein Mobilfunktelefon verwendet werden. Das erste oder zweite Kennwort kann durch Drücken einer Gesprächsanforderungs-Taste oder mindestens einer anderen Taste des Telefons übermittelt werden. Das System kann ein GSM-Netz und die Speichervorrichtung ein Home Location Register sein, in dem teilnehmerbezogene Daten gespeichert sind. Mindestens eines der Kennwörter kann in der Zugriffsvorrichtung oder an anderer Stelle erzeugt werden und nur für eine Zugriffssitzung gültig sein. Des weiteren wird vorgeschlagen, mindestens eines der Kennworte unter Verwendung einer Teilnehmeridentifikation und der gegenwärtigen Uhrzeit oder des Datums zu erzeugen. Eines der Kennwörter kann für eine Datenverschlüsselung und für eine Datenübertragung zwischen der ersten oder der zweiten Kommunikationseinrichtung und der Zugriffsvorrichtung verwendet werden. Nach Freigabe eines Datenzugriffs kann von einer der Kommunikationseinrichtungen mindestens ein weiteres Kennwort zur Zugriffsvorrichtung übertragen werden, um einen erweiterten Zugriff auf das System oder auf weitere in der Speichervorrichtung gespeicherter Daten freizugeben. Als Vorrichtung kann ein System mit verbundenen Zugriffsvorrichtungen verwendet werden, mit einer Datenverarbeitungsvorrichtung, über ein Datenverarbeitungsvorrichtungsnetzwerk, an das die Zugriffsvorrichtung anschließbar ist, unter Verwendung eines fest angeschlossenen Telefons, mit einem Mobiltelefon, das über ein festes Netz bzw. ein Mobilfunknetz an die Zugriffsvorrichtung anschließbar ist.

Diese Vorrichtung erzeugt auf sehr komplizierte Art und Weise verschiedene Kennwörter, die über getrennte Kommunikationseinrichtungen gesendet werden.

Aus der WO 95/19593 ist ein Computer-Sicherheitssystem vorbekannt, bei dem das System fallweise einen Code A erzeugt, der umtransformiert wird und einen Code B erzeugt, wobei sogar ein dritter Code erzeugt wird, der mit dem zweiten Code verglichen werden soll und bei Übereinstimmung des zweiten und dritten Codes erst der Zugang freigegeben wird.

Durch die US-A-5,875,394 werden ein "subscriber password" und ein "network password", also verschiedene Passwörter vergeben. Das Ganze wird von ein und demselben Apparat durchgeführt, denn der Benutzer ruft ein sogenanntes "Aktivierungscenter" an, das den Anruf identifiziert und ihm dann ein Passwort zusendet, nachdem der Registrierungsserver den Anrufer mit dem in seinem HRL abgelegten Daten verglichen hat.

### Aufgabe

Der Erfindung liegt die Aufgabe zugrunde, ein Verfahren zur Freigabe einer Zugangsberechtigung zu schaffen, bei welchem auf der Basis der Überprüfung der Authentizität der Identität eines Dienste-Nutzers die Nutzung eines Dienstes nur dann möglich ist, wenn über zwei Dateneingabeterminals, dessen Daten bei dem Dienste-Nutzer bekannt sind, der gleiche Dienste-Nutzer nur durch die vom Dienste-Anbieter übermittelte Zugangskennung in Verbindung treten kann.

### Lösung der Aufgabe betreffend das Verfahren

Diese Aufgabe wird durch die in **Patentanspruch 1** wiedergegebenen Merkmale gelöst.

### Einige Vorteile

Bei der Erfindung wird im Gegensatz zu der DE 197 18 103 A1 über nur eine z. B. gesicherte Verbindung die Identifizierung an den Dienste-Anbieter gesandt, während dieser über dieselbe Verbindung das zunächst noch ungültige Passwort oder dergleichen an den Benutzer zurücksendet.

Das Verfahren kann angewendet werden, wenn eine Zugangsberechtigung für die Nutzung eines Dienstes nur dann durch den Dienste-Anbieter freigegeben werden soll, wenn zuvor die Authentizität der Identität des Dienste-Nutzers mit hoher Sicherheit überprüft wurde. Durch die Überprüfung der Authentizität der Identität des Dienste-Nutzers und die Verknüpfung der Freigabe der Zugangskennung an diese Überprüfung wird die Möglichkeit des Missbrauchs durch Vorgabe einer falschen Identität erheblich reduziert.

Eine missbräuchliche Nutzung ist nur möglich, wenn sich das Endgerät zum Zeitpunkt der Registrierung bereits im Besitz eines Unbefugten befindet.

### Weitere erfinderische Ausführungsformen

Weitere erfinderische Ausführungsformen sind in den **Patentansprüchen 2** bis **6** beschrieben.

Die Limitierung der Zeitspanne, in der die zunächst ungültige Zugangskennung verwendet werden kann, um den Dienste-Nutzer zu authentisieren, erhöht nochmals die Sicherheit, indem der Dienste-Nutzer gezwungen wird, sich in dem genannten Zeitintervall zu authentisieren. Eine Authentisierung nach Ablauf des Zeitintervalls ist nicht möglich, der Dienste-Nutzer muss sich in diesem Fall neu registrieren und erhält dann eine neue ungültige Zugangskennung - **Patentanspruch 2** - als Zugangsberechtigung.

Nachdem der Dienste-Nutzer erfolgreich authentisiert wurde und ihm durch den Dienste-Anbieter die Zugangskennung freigegeben wurde, soll es dem Dienste-Nutzer möglich sein, die Zugangskennung nach eigenem Belieben zu ändern - **Patentanspruch 3**.

Zur Erhöhung der Sicherheit besteht die Option, die Nutzung der gültigen Zugangskennung so einzuschränken, dass die Zugangskennung nur eine vorbestimmte Anzahl von Nutzungen gültig bleibt. Wenn diese Anzahl erreicht ist, wird die Zugangskennung automatisch auf ungültig gesetzt. Die Gültigkeit wird erst wieder hergestellt, indem der Dienste-Nutzer sich erneut nach dem im Patentanspruch 1 beschriebenen Verfahren authentisiert - **Patentanspruch 4**.

Die Verschlüsselung bietet dem Dienste-Nutzer den Vorteil, dass seine persönlichen Daten wie z. B. Bankverbindung, Kreditkartennummer o. ä. durch Dritte nicht unbefugt mitgelauscht werden - **Patentanspruch 5**.

Die Verschlüsselung bietet dem Dienste-Nutzer den Vorteil, dass die ungültige Zugangskennung und sonstige Angaben des Registrierungsservers durch Dritte nicht unbefugt mitgelauscht werden - **Patentanspruch 6**.

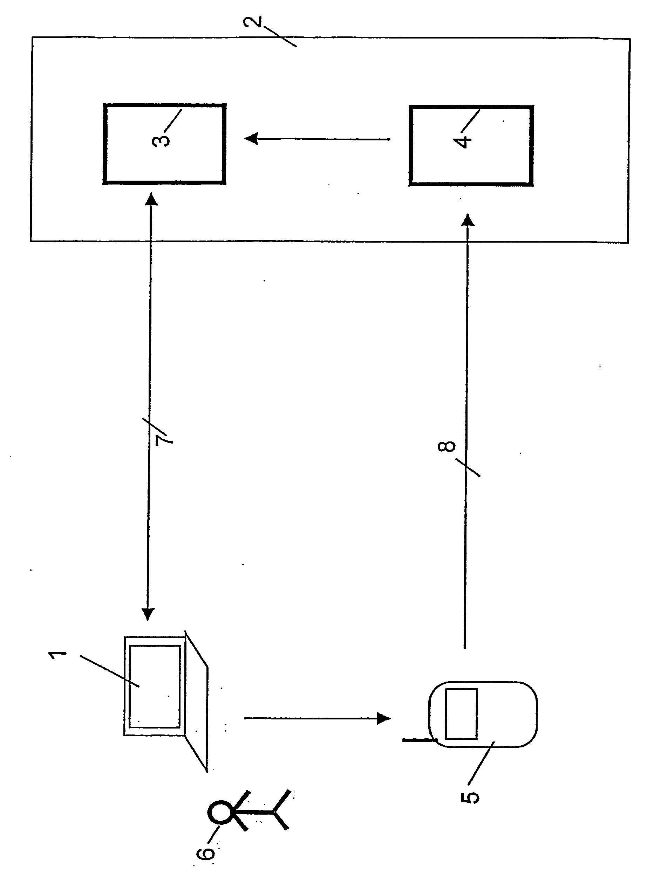

In der Zeichnung ist die Erfindung - teils schematisch - an einem Ausführungsbeispiel veranschaulicht.

Mit dem Bezugszeichen 1 ist ein Dateneingabeterminal als erstes Endgerät bezeichnet, das vorliegend als PC ausgebildet ist, während insgesamt mit dem Bezugszeichen 2 ein Dienste-Anbieter bezeichnet ist, der einen Registrierungsserver 3 und ein Short-Message-Service-Center als Nachrichten-Konverter 4 umfasst.

Das Bezugszeichen 5 bezeichnet ein zweites Endgerät, das vorliegend als Mobilfunkgerät ausgebildet ist.

Der Dateneingabeterminal 1 als erstes Endgerät und das zweite Endgerät 5 sind beide für einen Dienste-Nutzer 6 bei dem Dienste-Anbieter 2 registriert. Das bedeutet also, dass der Dienste-Anbieter 2 die persönlichen Daten des Dienste-Nutzers 6 kennt. Normalerweise befinden sich somit das Endgerät 1 und das Endgerät 5 in Besitz desselben Dienste-Nutzers 6.

Das Dateneingabeterminal 1 kann über eine gesicherte Verbindung 7, zum Beispiel Secure Socket Layer, mit dem Registrierungsserver 3 des Dienste-Anbieters 2 in Verbindung treten, während das zweite Endgerät 5 mit dem Nachrichten-Konverter 4 über eine Verbindung 8, beispielsweise über ein GSM-Mobilfunknetz, oder über ISDN oder SUS, in Verbindung treten kann.

### Die Verfahrensweise ist folgende:

### Schritt 1:

Der Dienste-Nutzer 6 tritt über das erste Endgerät 1, also über das Dateneingabeterminal 1 über die gesicherte Verbindung 7 mit dem Registrierungsserver 3 in Verbindung, der die persönlichen Daten des Dienste-Nutzers 6 kennt.

### Schritt 2:

Der Registrierungsserver 3 übermittelt an den Dienste-Nutzer 6 auf sein Dateneingabeterminal 1 über dieselbe Verbindung 7 eine noch ungültige Zugangskennung (Passwort, Kenn-Nummer, TAN oder dergleichen).

### Schritt 3:

Der Dienste-Nutzer 6 liest die Zugangskennung, das Passwort, die Kenn-Nummer, TAN oder dergleichen auf seinem Endgerät 1 ab.

### Schritt 4:

Der Dienste-Nutzer 6 schickt die gemäß Schritt 3 abgelesene Zugangskennung, die Kenn-Nummer oder dergleichen über sein zweites Endgerät 5 über die Verbindung 8, zum Beispiel über ein GSM-Mobilfunknetz, an den Nachrichten-Konverter 4.

### Schritt 5:

Der Dienste-Anbieter 2 überprüft die über die Verbindung 7 an den Dateneingabeterminal 1 gesendete Zugangskennung, das Passwort, die Kennung oder dergleichen mit dem über die Verbindung 8 von dem Dienste-Nutzer 6 empfangene Zugangskennung. Bei Gleichheit wird die Zugangskennung, das Passwort oder dergleichen gültig und der Dienste-Nutzer 6 kann die Dienste des Dienste-Anbieters 2, zum Beispiel im Internet, in Anspruch nehmen.

Der Registrierungsserver 3 und der Nachrichten-Konverter 4 können räumlich vereinigt sein.

Des weiteren ist es möglich, dass das Dateneingabeterminal 1, die über die Leitung 7 von dem Registrierungsserver 3 empfangene Zugangskennung automatisch über ein zweites Endgerät 5 und damit über die Verbindung 8 an den Nachrichten-Konverter 4 weitergibt.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## Patentansprüche

1. Verfahren zum Feststellen der Authentizität der Identität eines Dienste-Nutzers (6) gegenüber einem Dienste-Anbieter (2) mit einem Registrierungsserver (3) und einem Nachrichten-Konverter (4) zur Freigabe einer Zugangsberechtigung für einen Dienst unter Verwendung von zwei verschiedenen für denselben Dienste-Nutzer (6) bei einem Registrierungsserver (3) registrierten Dateneingabeterminals (1, 5) mit folgenden Verfahrensschritten:
a) der Dienste-Nutzer (6) tritt über das erste Dateneingabeterminal (1) über eine zum Beispiel durch Secure Socket Layer gesicherte Verbindung (7) mit dem Registrierungsserver (3) in Verbindung, der die persönlichen Daten des Dienste-Nutzers (6) kennt;
b) der Registrierungsserver (3) übermittelt an den Dienste-Nutzer (6) über dieselbe gesicherte Verbindung (7) auf dessen erstes Dateneingabeterminal (1) eine ungültige Zugangskennung, mittels derer der Zugang zu dem Dienst noch nicht möglich ist;
c) der über die gesicherte Verbindung (7) gemäß Merkmal a) identifizierte Dienste-Nutzer (6) nimmt auf seinem ersten Dateneingabeterminal (1) die ihm übermittelte ungültige Zugangskennung zur Kenntnis;
d) die über das erste Dateneingabeterminal (1) übermittelte ungültige Zugangskennung wird über ein zweites Dateneingabeterminal (5) über eine weitere gesicherte Verbindung (8), zum Beispiel über ein GSM/SMS-Mobilfunknetz oder über eine ISDN-Verbindung, an denselben Nachrichten-Konverter (4) gesandt;
e) der Dienste-Anbieter (2) überprüft die über die weitere gesicherte Verbindung (8) gemäß Merkmal d) übermittelte ungültige Zugangskennung und vergleicht sie mit der über die erste gesicherte Verbindung (7) an das erste Dateneingabeterminal (1) gesandte ungültige Zugangskennung und gibt bei Übereinstimmung den Zugang zu dem Dienst durch den Dienste-Nutzer (6) frei.

2. Verfahren nach Anspruch 1, **dadurch gekennzeichnet, dass** die über die gesicherte Leitung (7) an das erste Dateneingabeterminal (1) des Dienste-Nutzers (6) übermittelte zunächst ungültige Zugangskennung nur für eine limitierte Zeitspanne vom Dienste-Nutzer (6) verwendet werden kann.

3. Verfahren nach Anspruch 1 oder 2, **dadurch gekennzeichnet, dass** die Zugangskennung von dem Dienste-Nutzer (6) nach Freigabe durch den Dienste-Anbieter (6) durch den Dienste-Nutzer (6) nach eigenem Belieben verändert werden kann.

4. Verfahren nach Anspruch 1 oder einem der Ansprüche 2 bis 3, **dadurch gekennzeichnet, dass** die Nutzung der gültigen Zugangskennung auf eine bestimmte Anzahl von Nutzungen beschränkt wird.

5. Verfahren nach Anspruch 1 oder einem der Ansprüche 2 bis 4, **dadurch gekennzeichnet, dass** die von dem ersten Dateneingabeterminal (1) an den Registrierungsserver (3) übermittelten Daten verschlüsselt werden.

6. Verfahren nach Anspruch 1 oder einem der Ansprüche 2 bis 5, **dadurch gekennzeichnet, dass** die vom Registrierungsserver (3) an das erste Dateneingabeterminal (1) zurückgesandte, zunächst noch ungültige Zugangskennung, verschlüsselt wird.

## Claims

1. Method of ascertaining the authenticity of the identity of a service user (6) to a service provider (2) with a registration server (3) and a message converter (4) for clearance of an access entitlement for a service, using two different data input terminals (1, 5) registered for the same service user (6) with a registration server (3) with the following method steps:
a) the service user (6) establishes via the first data input terminal (1) via a connection (7) secured by, for example, secure socket layers contact with the registration server (3) which knows the personal data of the service user (6;
b) the registration server (3) transmits to the service user (6) via the same secured connection (7) to his first data input terminal (1) an invalid access code by means of which the access to the service is still possible;
c) the service user (6) identified via the secured connection (7) in accordance with feature a) notes on his first data input terminal (1) the invalid access code transmitted to him;
d) the invalid access code transmitted via the first data input terminal (1) is sent to the same message converter (4) via a second data input terminal (5) via a further secured connection (8), for example, via a GSM/SMS mobile phone network or via an ISDN connection;
e) the service provider (2) checks the invalid access code transmitted via the further secured connection (8) in accordance with feature d) and compares it with the invalid access code sent to the first data input terminal (1) via the first secured connection (7) and, if they match, allows access to the service by the service user (6);

2. Method in accordance with claim 1, **characterised in that** the initially invalid access code transmitted to the first data input terminal (1) of the service users (6) via the secured line (7) can be used by the service user (6) for only a limited period of time;

3. Method in accordance with claim 1 or 2, **characterised in that** the access code of the service user (6) can be changed by the service user (6) at his discretion after clearance by the service provider (2).

4. Method in accordance with claim 1 or one of claims 2 to 3, **characterised in that** use of the valid access code is restricted to a specific number of uses.

5. Method in accordance with claim 1 or any of claims 2 to 4, **characterised in that** the data transmitted from the first data input terminal (1) to the registration server (3) are encoded.

6. Method in accordance with claim 1 or any of claims 2 to 5, **characterised in that** the initially still invalid access code sent back from the registration server (3) to the first data input terminal (1) is encoded.

## Revendications

1. Procédé permettant à un fournisseur (2) de services de constater l'authenticité de l'identité d'un utilisateur (6) de services, à l'aide d'un serveur (3) d'enregistrement et d'un convertisseur (4) de messages servant à valider une autorisation d'accès à un service en utilisant, pour le même utilisateur (6) de services, deux terminaux (1, 5) différents de saisie de données enregistrés auprès d'un serveur d'enregistrement (3), le procédé passant par les étapes suivantes :
a) Par le biais du premier terminal (1) de saisie des données, l'utilisateur (6) des services établit une liaison (7), sécurisée par exemple par Secure Socket Layer, avec le serveur (3) d'enregistrement qui connaît les données personnelles de l'utilisateur (6) des services ;
b) Par le biais de cette même liaison (7) sécurisée, le serveur (3) d'enregistrement transmet à l'utilisateur (6) de services, sur son premier terminal (1) de saisie des données, un identifiant invalide à l'aide duquel l'accès au service voulu n'est pas encore possible ;
c) L'utilisateur (6) de services identifié par le biais de la liaison (7) sécurisée **caractérisée** à la section a) prend connaissance de l'identifiant d'accès invalide qui lui a été transmis par son premier terminal (1) de saisie de données ;
d) L'identifiant d'accès invalide communiqué via le premier terminal (1) de saisie des données est envoyé - via un deuxième terminal (5) de saisie de données utilisant une autre liaison (8) sécurisée, par exemple un réseau de téléphonie mobile GMS/SMS ou une liaison RNIS - au même convertisseur (4) de messages ;
e) Le fournisseur (2) de services vérifie l'identifiant d'accès invalide transmis par l'autre liaison (8) sécurisée **caractérisée** à la section d), et compare cet identifiant avec l'identifiant invalide envoyé au premier terminal (1) de données via la première liaison (7) sécurisée ; s'il y a concordance, il autorise l'accès de l'utilisateur (6) de services à ce service.

2. Procédé selon la revendication 1, **caractérisé en ce que** l'identifiant d'accès invalide dans un premier temps, transmis via la ligne (7) sécurisée au premier terminal (1) de saisie de données, ne peut être utilisé par l'utilisateur (6) de services que pendant une période limitée.

3. Procédé selon la revendication 1 ou 2, **caractérisé en ce que** l'identifiant d'accès de l'utilisateur (6) de services peut être modifié par ce dernier (6) à volonté après que le fournisseur (2) de services l'a validé.

4. Procédé selon la revendication 1 ou l'une des revendications 2 et 3, **caractérisé en ce que** l'utilisation de l'identifiant d'accès valide est limitée à un nombre précis d'utilisations.

5. Procédé selon la revendication 1 ou l'une des revendications 2 à 4, **caractérisé en ce que** les données transmises au serveur (3) d'enregistrement depuis le premier terminal (1) de saisies de données le sont sous une forme cryptée.

6. Procédé selon la revendication 1 ou l'une des revendications 2 à 5, **caractérisé en ce que** le serveur (3) d'enregistrement renvoie sous une forme cryptée, au premier terminal (1) de saisie de données, l'identifiant d'accès dans un premier temps encore invalide.
